# EUROPÄISCHE PATENTSCHRIFT

(11) **EP 2 242 687 B1**
(45) Veröffentlichungstag und Bekanntmachung des Hinweises auf die Patenterteilung: **06.07.2011**
(21) Anmeldenummer: 09706726.8
(22) Anmeldetag: 15.01.2009
(51) Int. Cl.: B64D 11/06

(54) **SYSTEM ZUR GLEICHZEITIGEN LONGITUDINALEN VERSCHIEBUNG MEHRERER SITZREIHEN**
SYSTEM FOR SIMULTANEOUSLY MOVING SEVERAL ROWS OF SEATS IN A LONGITUDINAL DIRECTION
SYSTÈME PERMETTANT DE DÉPLACER SIMULTANÉMENT PLUSIEURS RANGÉES DE SIÈGES LONGITUDINALEMENT

(30) Priorität: 31.01.2008 DE 102008006948; 31.01.2008 US 63031
(43) Veröffentlichungstag der Anmeldung: 27.10.2010
(73) Patentinhaber: Airbus Operations GmbH, 21129 Hamburg (DE)
(72) Erfinder: HERZOG, Mark, 22885 Barsbüttel (DE); DUPONT, Michael, 80337 München (DE); HARRIEHAUSEN, Michael, 22529 Hamburg (DE)
(74) Vertreter: Kopf, Korbinian Paul
(86) Internationale Anmeldenummer: PCT/EP2009/050413
(87) Internationale Veröffentlichungsnummer: WO 2009/095307

(56) Entgegenhaltungen:
- EP-A- 0 215 495
- EP-A- 1 849 647
- WO-A-03/074357
- DE-A1-102005 047 657
- JP-A- 2 279 433

## Beschreibung

### Gebiet der Erfindung

Die Erfindung betrifft die Sitzplatzkonfiguration in Flugzeugen. Insbesondere betrifft die Erfindung ein System zur gleichzeitigen longitudinalen Verschiebung mehrerer ausgewählter Sitze oder Sitzreihen in einem Flugzeug, eine Sitzgruppe in einem Flugzeug, die Verwendung eines derartigen Systems in einem Flugzeug, sowie ein Flugzeug mit einem solchen System.

### Technologischer Hintergrund

Ein Flugzeug hat ein bestimmtes Sitz-Layout (Sitzplatzkonfiguration), welches als fix zu betrachten ist und in 1, 2 oder 3 Klassen unterteilt ist.

Erst eine Rekonfiguration erlaubt den Umbau dieses Layouts, um z. B. mehr Sitze einer bestimmten Klasse zur Verfügung zu haben. Die Klassen können sich durch unterschiedliche Arten von Sitzen oder auch nur durch den Sitzabstand unterscheiden.

Ist ein Flug nur halb ausgebucht, so kann den Passagieren trotzdem kein höherer Komfort in Form von mehr Platz geboten werden. Eine schnelle Anpassung der prozentualen Verteilung der Klassen je nach Passagieraufkommen ist ebenso nicht möglich.

WO 03/074357 A beschreibt ein Verfahren zur bedarfsgerechten Anpassung der Sitzreihenanordnung in Passagierflugzeugen. Es ist eine Steuerungseinrichtung vorgesehen, in der eine aktuell gewünschte Sitzreihenanordnung gespeichert wird und jede Sitzreihe, deren Position zur Erzielung der aktuell gewünschten Sitzreihenanordnung zu verändern ist, gesteuert durch die Steuerungseinrichtung automatisch auf ihren Befestigungsschienen auf die durch die aktuell gewünschte Sitzreihenanordnung vorgegebenen Position verfahren wird.

Die englischsprachige Zusammenfassung der JP 02 279433 A beschreibt ein Verfahren zur Änderung der Kabinenkonfiguration sowie einen entsprechenden Sitz. Es ist ein Motor vorgesehen, der den Sitz verschiebt und hierfür in die Sitzschiene eingreift.

### Zusammenfassung der Erfindung

Es ist eine Aufgabe der Erfindung, eine automatische, individuell anpassbare Sitzplatzkonfiguration in einem Flugzeug bereitzustellen.

Es sind ein System zur gleichzeitigen longitudinalen Verschiebung mehrerer ausgewählter Sitze oder Sitzreihen in einem Flugzeug, eine Sitzgruppe, eine Verwendung eines derartigen Systems in einem Flugzeug und ein Flugzeug gemäß den Merkmalen der unabhängigen Ansprüche angegeben. Weiterbildungen der Erfindung ergeben sich aus den Unteransprüchen.

Die beschriebenen Ausführungsbeispiele betreffen gleichermaßen das System, die Sitzgruppe, die Verwendung und das Flugzeug.

Gemäß einem Ausführungsbeispiel der Erfindung ist ein System zur gleichzeitigen longitudinalen Verschiebung mehrerer ausgewählter Sitze oder Sitzreihen in einem Flugzeug angegeben, wobei das System eine Antriebseinrichtung zum Verschieben der Sitze aufweist, und wobei das System zur automatischen Verschiebung der Sitze gemäß einer Änderung in einer Sitzkonfigurationsplanung ausgeführt ist.

In anderen Worten können, beispielsweise bordextern, Änderungen in der Sitzplatzkonfigurationsplanung vorgenommen werden. Diese Änderungen werden beispielsweise von einem Fluggast eingegeben oder initiiert. Diese Sitzplatzkonfigurationsplanung wird dann dem System mitgeteilt, so dass die Sitze entsprechend automatisch verschoben werden können. Das System ermöglicht somit das schnelle, automatische Verschieben von mehreren Sitzreihen (oder einzelnen Sitzen), je nach Bedarf. Mit diesem System können mehrere Sitzreihen gleichzeitig ihren Abstand zueinander vergrößern oder verkleinern.

Gemäß der Erfindung ist das System als mechanisch gekoppeltes System ausgeführt. Alle in Frage kommenden Sitze bzw. Sitzreihen sind mechanisch an die Antriebseinrichtung gekoppelt, welche daraufhin alle Sitze gleichzeitig verschiebt.

Gemäß der Erfindung weist die Antriebseinrichtung eine Scherenmechanik mit einem einzelnen Antrieb für alle Sitze auf.

Dieser einzelne Antrieb ist beispielsweise an der Vorderseite der Scherenmechanik (in Flugzeugrichtung gesehen) angebracht. Die einzelnen Sitze oder Sitzreihen sind an dem Knotenpunkt in der Scherenmechanik angebracht.

Gemäß einem weiteren Ausführungsbeispiel der Erfindung ist die Antriebseinrichtung zum gleichzeitigen Bewegen sämtlicher ausgewählter Sitze ausgeführt.

Auf diese Weise können die Sitzabstände schnell und ohne Aufwand verändert werden.

Gemäß einem weiteren Ausführungsbeispiel der Erfindung weist das System weiterhin einen Drehzahlsensor oder einen Positionssensor für jeden Sitz bzw. für jede Sitzreihe zur Bestimmung einer aktuellen longitudinalen Position des entsprechenden Sitzes oder der entsprechenden Sitzreihe auf.

Auf diese Weise kann das System detektieren, wo sich jeder einzelne Sitz befindet.

Gemäß einem weiteren Ausführungsbeispiel der Erfindung weist das System eine elektronische Steuerung zur Steuerung der Antriebseinrichtung auf.

Diese Steuerung kann beispielsweise durch das Flugpersonal bedient werden. Auch kann die Steuerung mit bordexternen Steuerdaten versorgt werden.

Gemäß einem weiteren Ausführungsbeispiel der Erfindung weist das System eine oder mehrere separate Sitzschienen zum Führen der Sitze auf. Weiterhin ist eine Verriegelungseinrichtung für jeden Sitz vorgesehen, die zum Verriegeln bzw. Fixieren des Sitzes in der entsprechenden bzw. den entsprechenden Sitzschienen dient.

Somit kann sichergestellt werden, dass nach der Verschiebung der Sitze keine weitere Sitzverschiebung mehr stattfinden kann.

Gemäß einem weiteren Ausführungsbeispiel der Erfindung weist das System weiterhin eine Eingabeeinheit zur Änderung der Sitzkonfigurationsplanung durch einen Fluggast auf, wobei die Eingabeeinheit außerhalb des Flugzeugs angeordnet werden kann und in diesem Fall drahtlos kommunizierfähig mit der Steuerung gekoppelt ist.

Beispielsweise kann der Fluggast bei Flugbuchung eingeben, wie viel Beinfreiheit er zur Verfügung gestellt haben möchte. Vor dem Einstieg der Passagiere wird dann die Sitzplatzeinstellung entsprechend vorgenommen.

Gemäß einem weiteren Ausführungsbeispiel der Erfindung ist eine Sitzgruppe in einem Flugzeug angegeben, welche eine Vielzahl von Flugsitzen aufweist. Weiterhin weist die Sitzgruppe ein oben beschriebenes System zur gleichzeitigen longitudinalen Verschiebung der Sitze oder Sitzreihen auf.

Gemäß einem weiteren Ausführungsbeispiel der Erfindung ist die Verwendung eines oben beschriebenen Systems in einem Flugzeug angegeben.

Gemäß einem weiteren Ausführungsbeispiel der Erfindung ist ein Flugzeug mit einem oben beschriebenen System angegeben.

Gemäß einem weiteren Ausführungsbeispiel der Erfindung ist ein Verfahren zum gleichzeitigen longitudinalen Verschieben mehrerer ausgewählter Sitze oder Sitzreihen in einem Flugzeug angegeben, bei dem eine Sitzplatzkonfiguration geplant wird und daraufhin ein gleichzeitiges Verschieben der Sitze gemäß einer Änderung in der Sitzplatzkonfigurationsplanung erfolgt.

Gemäß einem weiteren Ausführungsbeispiel der Erfindung erfolgt zusätzlich eine Übermittlung der geplanten Sitzplatzkonfiguration von einer Eingabeeinheit an eine Steuereinheit, ein automatisches Lösen der Fixierung der Sitze vor der Verschiebung und ein automatisches Fixieren der Sitze nach der Verschiebung.

Im Folgenden werden mit Verweis auf die Figuren bevorzugte Ausführungsbeispiele der Erfindung beschrieben.

### Kurze Beschreibung der Figuren

Fig. 1 zeigt eine schematische Darstellung von zwei möglichen Sitzplatzkonfigurationen in einem Flugzeug.
Fig. 2 zeigt eine schematische Darstellung weiterer möglicher Sitzplatzkonfigurationen inklusive einer Benutzerschnittstelle.
Fig. 3 zeigt eine schematische Darstellung einer Antriebseinrichtung.
Fig. 4 zeigt eine schematische Darstellung der Antriebseinrichtung gemäß der Erfindung.
Fig. 5 zeigt eine schematische Darstellung weiterer möglicher Sitzplatzkonfigurationen gemäß einem Ausführungsbeispiel der Erfindung.

### Detaillierte Beschreibung von Ausführungsbeispielen

Die Darstellungen in den Figuren sind schematisch und nicht maßstäblich.

In der folgenden Figurenbeschreibung werden für die gleichen oder ähnlichen Elemente die gleichen Bezugsziffern verwendet.

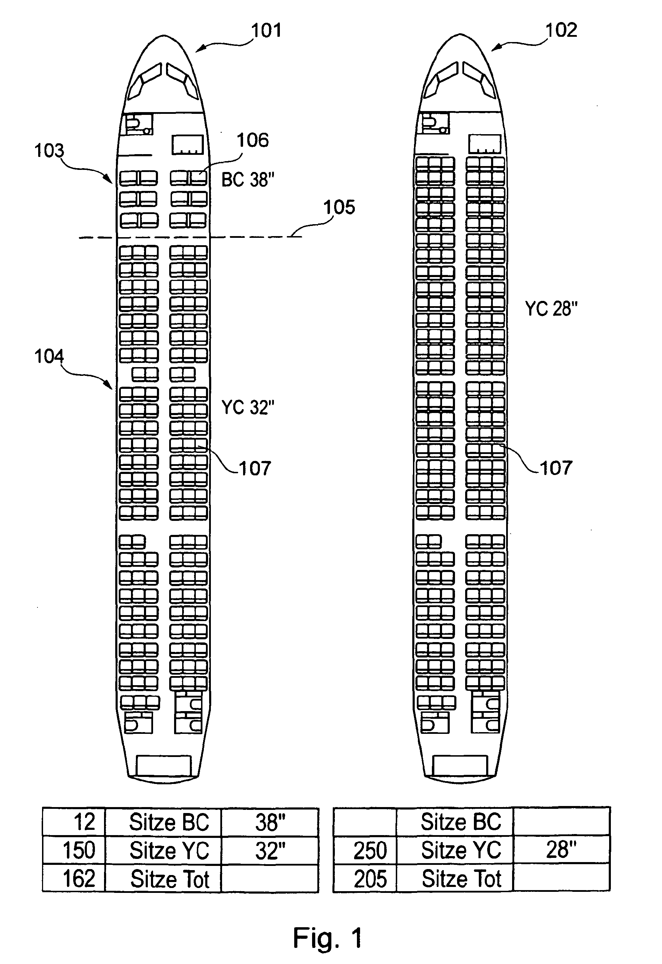

Fig. 1 zeigt eine schematische Darstellung von zwei Sitzplatzkonfigurationen 101, 102 in einem Flugzeug. In der Konfiguration 101 sind zwölf Sitze 106 in der Business Class (BC) 103 vorgesehen. Der Abstand der Sitze beträgt 38 Inch (also umgerechnet etwa 96,5 cm).

Die gestrichelte Linie 105 symbolisiert die Trennung zwischen Business Class 103 und YC Klasse 104. Im YC-Bereich sind 150 Sitze 107 angeordnet, welche einen Abstand von 32 Inch (also etwa 81 cm) voneinander aufweisen.

Insgesamt handelt es sich um 162 Sitze.

In der Konfiguration 102 befinden sich sämtliche Sitze in der YC-Klasse, in diesem Fall mit einem Abstand von 28 Inch (also ungefähr 71 cm). Es handelt sich um insgesamt 205 Sitze 107.

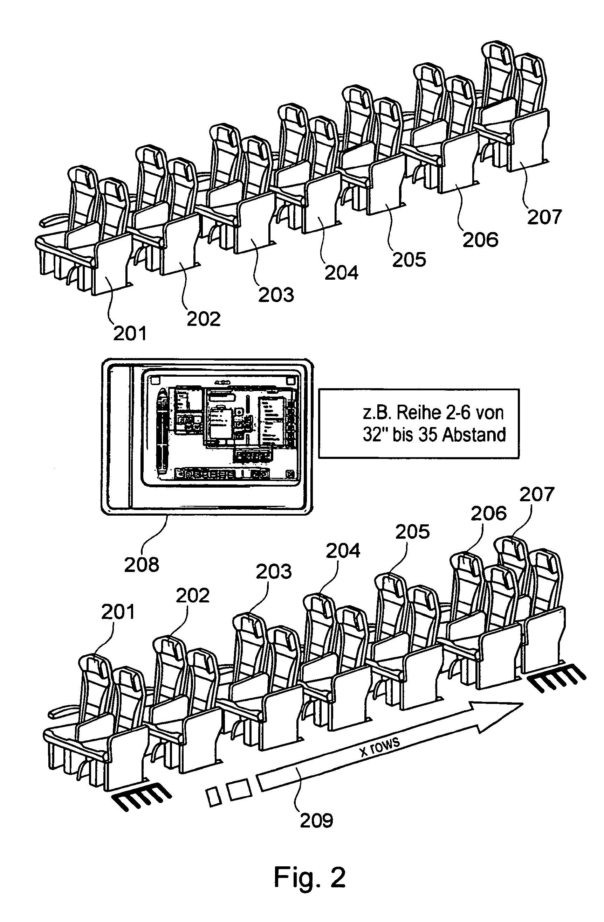

Fig. 2 zeigt eine schematische Darstellung weiterer Sitzkonfigurationen, die gemäß der Erfindung automatisch erstellt werden. Es sind sieben Sitzreihen 201, 202, 203, 204, 205, 206 und 207 vorgesehen, welche jeweils zwei Sitze aufweisen, die aneinandergekoppelt sind.

Die äußeren Sitze jeder Sitzreihe sind mit einer erfindungsgemäßen Antriebseinrichtung verbunden, welche die einzelnen Sitzreihen gemäß einer Sitzplatzkonfigurationsplanung verschieben kann. Auch ist es möglich, dass andere Sitze mit der Antriebseinrichtung verbunden sind, z.B. die inneren Sitze und/oder die mittleren Sitze.

Um die Sitzplatzkonfigurationsplanung vorzunehmen, ist die Benutzerschnittstelle 208 vorgesehen, bei der es sich um eine Eingabeeinheit handelt, die beispielsweise vom Bordpersonal zugänglich ist. Eine ähnliche Eingabeeinheit kann auch im Check-in-Bereich im Flughafen vorgesehen sein, über welche jeder Passagier seine gewünschte Beinfreiheit einstellen kann.

Nachdem die Sitzplatzkonfigurationsplanung vorgenommen ist, werden die Daten an eine Steuereinheit übermittelt, welche die Antriebseinrichtung entsprechend der zu erzielenden Sitzplatzkonfiguration steuert.

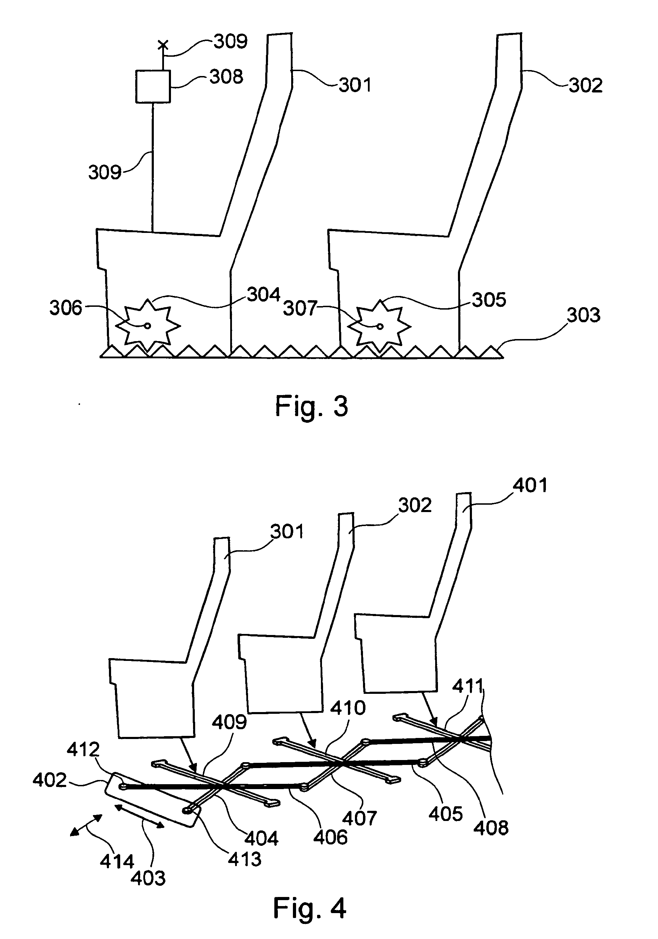

Eine solche Steuerung 308 ist beispielsweise in Fig. 3 gezeigt. Die Steuerung 308 kann mit einer Antenne 309 versehen sein, über welche die Steuerung 308 Daten von der Eingabeeinheit 208 oder auch von einer externen Eingabeeinheit empfangen kann. Die Steuerung 308 ist beispielsweise über eine Kabelverbindung 309 mit der Antriebseinrichtung verbunden.

Beispielsweise kann der Passagier beim Check-in an der entsprechenden Eingabeeinheit durch Knopfdruck den Sitz auswählen, den er haben möchte. Weiterhin kann der Passagier die gewünschte Beinfreiheit wählen. Vor dem Boarding wird das System dann die gewünschte Sitzkonfiguration automatisch durchführen.

Z. B. kann ein vorhandener Abstand von beispielsweise 15 Inch (ungefähr 38 cm) zwischen der Vorderseite der Sitzfläche des Sitzes 207 und der Rückseite des Sitzes 206 auf 0 Inch reduziert werden, wodurch die Sitzreihen 202 bis 206 jeweils 3 Inch mehr Abstand voneinander bekommen. Die Verschiebung der Sitzreihen 202 bis 206 ist durch Pfeil 209 symbolisiert.

Diese Verschiebung kann sowohl durch ein mechanisch gekoppeltes System (z. B. Scherenmechanik, d. h. alle Reihen bewegen sich gleichzeitig) als auch durch autark bewegliche Sitzreihen (z. B. Zahnstange, Antriebsmotor und Positionssensoren), die elektronisch gesteuert werden, geschehen. Das System kann sich je nach Konzept über oder unter dem Fußbodenniveau befinden (z. B. im Falle eines Doppelbodens).

Die Sitze weisen beispielsweise einen hohen Autonomiegrad auf, wodurch die Effektivität des Systems erhöht werden kann. Das bedeutet, dass wesentliche Funktionen der Serviceeinheiten der Passagiere (Passenger Service Units, PSU) in die Sitze integriert sind. Hierbei handelt es sich beispielsweise um eine Sauerstoffversorgung oder Leseleuchten. Dementsprechend sind auch die Systemschnittstellen entsprechend flexibel ausgelegt, so dass die Sitze verschoben werden können.

Auf diese Weise kann den Passagieren durch die Vergrößerung des Sitzabstandes der genutzten Sitzreihen kurz vor Abflug mehr Komfort geboten werden.

Fig. 3 zeigt eine schematische Darstellung eines Verstellsystems mit einer Antriebseinrichtung. Das System der Fig. 3 gestattet eine autarke Bewegung der einzelnen Sitzreihen. Hierfür ist eine Zahnschiene oder Zahnstange 303 vorgesehen. Jeder einzelne Sitz 301, 302 weist jeweils einen Antriebsmotor und einen Positions- oder Drehzahlsensor auf. Motoren und Sensoren werden elektronisch gesteuert, beispielsweise über Funk. Die einzelnen Motoren sind an die Zahnräder 304, 305 gekoppelt. Die Zahnräder rotieren um ihre Achsen 306, 307 und bewegen dabei den entsprechenden Sitz 301, 302 (oder die komplette Sitzreihe) nach vorne oder nach hinten. Führung und Verriegelung der Sitze erfolgt in separaten Sitzschienen (nicht abgebildet).

Alternativ kann auch ein Schneckenantrieb vorgesehen sein. Ein Vorteil des Schneckenantriebs besteht in der präzisen und zuverlässigen Verstellung der Sitze.

Fig. 4 zeigt eine schematische Darstellung eines Systems gemäß der Erfindung. Es handelt sich hierbei um ein mechanisch gekoppeltes System mit einer Scherenmechanik, die aus einzelnen Elementen 404, 405, 406, 407, 408, 409, 410 und 411 besteht. Die Elemente 404, 405, 406, 407, 408 sind über entsprechende Lagerungen so miteinander gekoppelt, dass ein Auseinanderziehen oder Zusammendrücken der Endpunkte 412, 413 in Pfeilrichtung 403 eine Verlängerung oder Verkürzung der Scherenmechanik zur Folge hat. Mit diesen Elementen 404 bis 408 sind die Träger oder Schienen 409, 410, 411 verbunden, auf denen die Sitze befestigt sind. Durch die Verkürzung oder Verlängerung der Scherenmechanik erfolgt somit eine Verschiebung der Sitze in longitudinaler Richtung 414.

Es ist ein einzelner Antrieb 402 vorgesehen, der die Enden 412, 413 auseinander zieht oder zusammendrückt. Alle Sitzreihen bewegen sich gleichzeitig.

Die Systeme der Fig. 3 und 4 können sich je nach Konzept über oder unter dem Fußbodenniveau befinden (z. B. Doppelboden inklusive Systemschnittstelle).

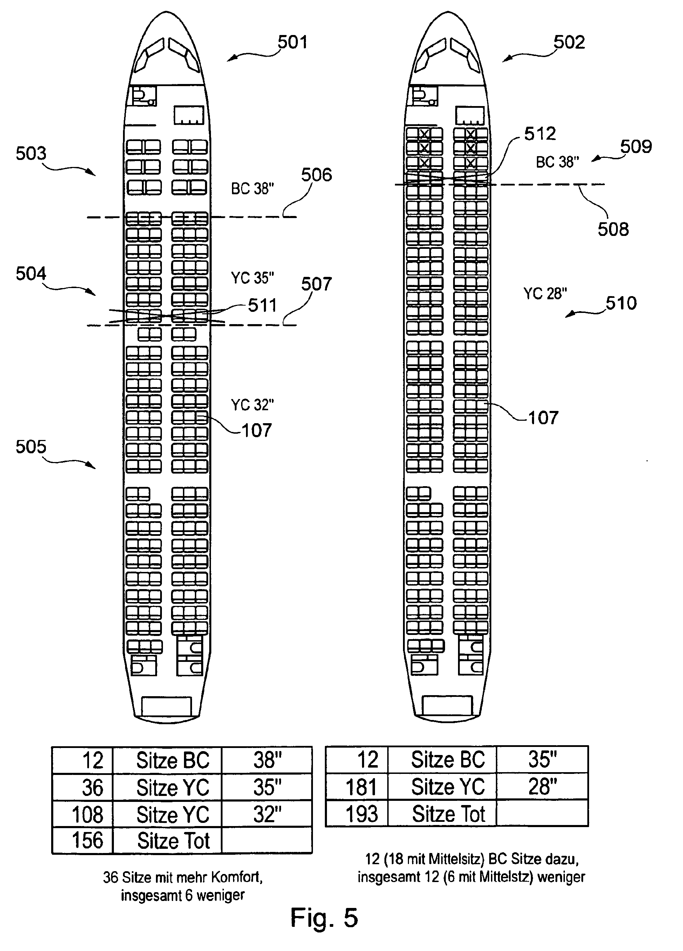

Fig. 5 zeigt eine weitere schematische Darstellung zwei möglicher Sitzkonfigurationen 501, 502.

In der ersten Konfiguration 501 sind im BC-Bereich 503, der einen Sitzabstand von 38 Inch aufweist, zwölf Sitze angeordnet. Im ersten YC-Bereich 504, der eine Sitzabstand von 35 Inch aufweist, sind 36 Sitze angeordnet.

Im zweiten YC-Bereich 505, der einen Sitzabstand von 32 Inch aufweist, sind 108 Sitze angeordnet. Insgesamt handelt es sich um 156 Sitze. Die Trennung der drei Bereiche ist durch die gestrichelten Linien 506, 507 symbolisiert.

Somit werden 36 Sitze mit größerer Beinfreiheit und somit mit mehr Komfort bereitgestellt. Insgesamt handelt es sich um sechs Sitze weniger als in dem Beispiel 101 der Fig. 1.

Die Sitzreihe 511 wird nicht verwendet, entsprechend der Sitzreihe 207 der Fig. 2.

In der Konfiguration 502 sind ebenfalls zwölf Sitze der BC-Klasse 509, aber mit einem Abstand von 35 Inch vorgesehen. Die Sitze der Sitzreihe 512 werden nicht verwendet (gemäß der Sitzreihe 207 in Fig. 2).

Weiterhin sind 181 Sitze im YC-Bereich 510 vorgesehen, welche einen Abstand von 28 Inch zueinander aufweisen.

Der BC-Bereich 509 befindet sich oberhalb der gestrichelten Linie 508, der YC-Bereich 510 befindet sich unterhalb der gestrichelten Line 508.

Insgesamt gibt es zwölf BC-Sitze (18, falls die Mittelsitze dazu kommen). Insgesamt umfasst dieses Ausführungsbeispiel zwölf Sitze (bzw. sechs Sitze, falls die Mittelsitze dazu kommen) weniger als das Ausführungsbeispiel 102 der Fig. 1.

Vorteile der Erfindung sind insbesondere darin zu sehen, dass kleine Layoutänderungen schnell und automatisch realisiert werden können. Weiterhin wird den Passagieren mehr Komfort bei nur teilweise ausgebuchtem Flugzeug geboten (ggf. als Klassen-Upgrade).

Ergänzend sei darauf hingewiesen, dass "umfassend" und "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

## Patentansprüche

1. System zur gleichzeitigen longitudinalen Verschiebung mehrerer ausgewählter Sitze oder Sitzreihen in einem Flugzeug, das System aufweisend:
eine Antriebseinrichtung (404, 405, 406, 407, 408, 409, 410, 411) zum Verschieben der Sitze (301, 302);
wobei das System zur automatischen Verschiebung der Sitze (301, 302) gemäß einer Änderung in einer Sitzplatzkonfigurationsplanung ausgeführt ist; **dadurch gekennzeichnet, dass**
das System als mechanisch gekoppeltes System ausgeführt ist ; und
die Antriebseinrichtung eine Scherenmechanik (404, 405, 406, 407, 408, 409, 410, 411) mit einem einzelnen Antrieb für alle Sitze aufweist.

2. System nach Anspruch 1,
wobei die Antriebseinrichtung (404, 405, 406, 407, 408, 409, 410, 411) zum gleichzeitigen Bewegen sämtlicher ausgewählter Sitze (301, 302) ausgeführt ist.

3. System nach einem der vorhergehenden Ansprüche, weiterhin aufweisend:
einen Drehzahlsensor oder einen Positionssensor für jeden Sitz (301, 302) oder jede Sitzreihe zur Bestimmung einer aktuellen longitudinalen Position des entsprechenden Sitzes oder der entsprechenden Sitzreihe.

4. System nach einem der vorhergehenden Ansprüche, weiterhin aufweisend:
eine elektronische Steuerung zur Steuerung der Antriebseinrichtung (404, 405, 406, 407, 408, 409, 410, 411).

5. System nach einem der vorhergehenden Ansprüche, weiterhin aufweisend:
eine oder mehrere separate Sitzschienen zum Führen der Sitze (301, 302); und
eine Verriegelungseinrichtung für jeden Sitz zum Verriegeln des Sitzes in der Sitzschiene.

6. System nach Anspruch 4, weiterhin aufweisend:
eine Eingabeeinheit zur Änderung der Sitzkonfigurationsplanung durch einen Fluggast;
wobei die Eingabeeinheit außerhalb des Flugzeugs anordenbar ist und in diesem Fall drahtlos kommunizierfähig mit der Steuerung gekoppelt ist.

7. Sitzgruppe für ein Flugzeug, die Sitzgruppe aufweisend:
eine Vielzahl von Flugzeugsitzen (301, 302); und
ein System zur gleichzeitigen longitudinalen Verschiebung der Sitze (301, 302) oder Sitzreihen nach einem der Ansprüche 1 bis 6.

8. Verwendung eines Systems nach einem der Ansprüche 1 bis 6 in einem Flugzeug (505).

9. Flugzeug (505) mit einem System nach einem der Ansprüche 1 bis 6.

10. Verfahren zum gleichzeitigen longitudinalen Verschieben mehrerer ausgewählter Sitze oder Sitzreihen in einem Flugzeug, das Verfahren aufweisend die Schritte:
Plane einer Sitzplatzkonfiguration;
gleichzeitiges Verschieben der Sitze (301, 302) gemäß einer Änderung in der Silzplatzkonfigurationsplanung;
wobei das Verschieben durch eine Scherenmechanik (404, 405, 406, 407, 408, 409, 410, 411) erfolgt.

11. Verfahren nach Anspruch 10, weiterhin aufweisend die Schritte:
Übermittlung der geplanten Sitzplatzkonfiguration von einer Eingabeeinheit an eine Steuereinheit;
automatisches Lösen der Fixierung der Sitze (301, 302) vor der Verschiebung;
automatisches Fixieren der Sitze (301, 302) nach der Verschiebung.

12. Verfahren nach Anspruch 11,
wobei die Eingabeeinheit außerhalb des Flugzeugs (505) angeordnet ist.

## Claims

1. A system for simultaneously longitudinally moving a plurality of selected seats or seat rows in an aircraft, the system comprising:
a drive device (404, 405, 406, 407, 408, 409, 410, 411) for moving the seats (301, 302);
wherein the system is designed for automatically moving the seats (301, 302) according to a change in the seating configuration planning;
**characterized in that**
the system is designed as a mechanically coupled system; and
the drive device comprises a scissor-type mechanism (404, 405, 406, 407, 408, 409, 410, 411) with a single drive for all the seats.

2. System according to claim 1,
wherein the drive device (404, 405, 406, 407, 408, 409, 410, 411) is designed for simultaneously moving all the selected seats (301, 302).

3. System according to any one of the preceding claims, further comprising:
a rotary speed sensor or a position sensor for each seat (301, 302) or for each seat row for determining a current longitudinal position of the corresponding seat or of the corresponding seat row.

4. System according to any one of the preceding claims, further comprising:
an electronic control device for controlling the drive device (404, 405, 406, 407,408,409,410,411).

5. System according to any one of the preceding claims, further comprising:
one or multiple separate seat rails for guiding the seats (301, 302); and
a locking device for each seat for locking the seat in the seat rail.

6. System according to claim 4, further comprising:
an input unit for changing the seating configuration planning by a passenger;
wherein the input unit can be arranged outside the aircraft and in this case is wirelessly coupled to the control device so that said input unit is able to communicate with the control device.

7. A seating arrangement for an aircraft, the seating arrangement comprising:
a plurality of aircraft seats (301, 302); and
a system for simultaneously longitudinally moving the seats (301, 302) or seat rows according to any one of claims 1 to 6.

8. Use of a system according to any one of claims 1 to 6 in an aircraft (505).

9. An aircraft (505) with a system according to any one of claims 1 to 6.

10. A method for simultaneously longitudinally moving a plurality of selected seats or seat rows in an aircraft, the method comprising the steps:
planning a seating configuration;
simultaneous moving of the seats (301, 302) according to a change in the seating configuration planning;
wherein the moving of the seats is performed by a scissor-type mechanism (404, 405, 406, 407, 408, 409, 410, 411).

11. Method according to claim 10, further comprising the steps:
transmission of the planned seating configuration from an input unit to a control unit;
automatic release of the affixation of the seats (301, 302) prior to moving;
automatic affixation of the seats (301, 302) after moving.

12. Method according to 11,
wherein the input unit is arranged outside the aircraft (505).

## Revendications

1. Système permettant le déplacement longitudinal simultané de plusieurs sièges ou rangées de sièges sélectionnés dans un avion, le système comprenant :
un dispositif d'entraînement (404, 405, 406, 407, 408, 409, 410, 411) pour le déplacement des sièges (301, 302) ;
le système étant réalisé pour le déplacement automatique des sièges (301, 302) suivant une modification dans un plan de configuration de places assises ;
**caractérisé en ce que**
le système est réalisé sous forme de système à accouplement mécanique ; et
le dispositif d'entraînement présente une mécanique à parallélogramme articulé (404, 405, 406, 407, 408, 409, 410, 411) avec un entraînement individuel pour tous les sièges.

2. Système suivant la revendication 1, dans lequel le dispositif d'entraînement (404, 405, 406, 407, 408, 409, 410, 411) est réalisé pour le déplacement simultané de tous les sièges (301, 302) sélectionnés.

3. Système suivant l'une des revendications précédentes, comprenant en outre :
un transmetteur de vitesse de rotation ou un transmetteur de position pour chaque siège (301, 302) ou chaque rangée de sièges, pour la détermination d'une position longitudinale actuelle du siège correspondant ou de la rangée de sièges correspondante.

4. Système suivant l'une des revendications précédentes, comprenant en outre :
une commande électronique destinée au contrôle du dispositif d'entraînément (404, 405, 406, 407, 408, 409, 410, 411).

5. Système suivant l'une des revendications précédentes, comprenant en outre :
un ou plusieurs rails de sièges séparés pour le guidage des sièges (301, 302) ; et
un dispositif de verrouillage pour chaque siège pour verrouiller le siège dans son rail.

6. Système suivant la revendication 4, comprenant en outre :
une unité d'entrée pour la modification du plan de configuration des sièges par un passager ;
l'unité d'entrée pouvant être disposée à l'extérieur de l'avion et couplée dans ce cas sans fil en communication avec la commande.

7. Groupe de sièges pour un avion, le groupe de sièges comprenant :
une multiplicité de sièges d'avion (301, 302) ; et
un système permettant le déplacement longitudinal simultané des sièges (301, 302) ou des rangées de sièges suivant l'une des revendications 1 à 6.

8. Utilisation d'un système suivant l'une des revendications 1 à 6 dans un avion (505).

9. Avion (505) comprenant un système suivant l'une des revendications 1 à 6.

10. Procédé permettant le déplacement longitudinal simultané de plusieurs sièges ou rangées de sièges sélectionnés dans un avion, le procédé comprenant les étapes :
planification d'une configuration de places assises ;
déplacement simultané des sièges (301, 302) suivant une modification dans le plan de configuration des places assises ;
le déplacement s'effectuant par une mécanique à parallélogramme articulé (404, 405, 406, 407, 408, 409, 410, 411).

11. Procédé suivant la revendication 10, comprenant en outre les étapes :
transmission de la configuration de places assises planifiée d'une unité d'entrée à une unité de commande ;
déblocage automatique de la fixation des sièges (301, 302) avant le déplacement ; fixation automatique des sièges (301, 302) après le déplacement.

12. Procédé suivant la revendication 11, dans lequel l'unité d'entrée est disposée à l'extérieur de l'avion (505).
